(19)

**Europäisches Patentamt**
**European Patent Office**
**Office européen des brevets**

(11) **EP 4 707 634 A1**

(12) **EUROPEAN PATENT APPLICATION**

(43) Date of publication:
**11.03.2026 Bulletin 2026/11**

(21) Application number: **24198855.9**

(22) Date of filing: **06.09.2024**

(51) International Patent Classification (IPC):
*F16F 1/04* (2006.01)    *F16F 1/12* (2006.01)
*F16F 3/04* (2006.01)    *B60G 15/06* (2006.01)
*B60G 17/027* (2006.01)

(52) Cooperative Patent Classification (CPC):
**B60G 15/065; B60G 17/0272; F16F 1/041;**
**F16F 1/121; F16F 3/04;** B60G 2202/312;
B60G 2202/32; B60G 2500/22; B60G 2500/30

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Öhlins Racing AB**
**194 27 Upplands Väsby (SE)**

(72) Inventors:
• **Danek, Magnus**
**186 92 Vallentuna (SE)**
• **NYGREN, Nils Göran**
**194 27 Upplands Väsby (SE)**
• **JAKTLUND, Kim**
**194 27 Upplands Väsby (SE)**

(74) Representative: **AWA Sweden AB**
**Matrosgatan 1**
**Box 5117**
**200 71 Malmö (SE)**

(54) **SPRING SYSTEM FOR A VEHICLE SHOCK ABSORBER, SHOCK ABSORBER COMPRISING THE SAME AND METHOD FOR REGULATING A SPRING SYSTEM OF A SHOCK ABSORBER**

(57)    There is provided a spring system (300) for a vehicle shock absorber. The spring system (300) comprising a first platform (310), a second platform (320) which is movable relative to the first platform (310), a first spring (330) arranged in abutment with the first platform (310), a second spring (340), coupled in series with the first spring (330) and arranged in abutment with the second platform (320). The spring system further provides a first stopper (350), and a second stopper (260). The first stopper (350) is arranged to limit the compression of the first spring (330) when the first spring has a first predetermined length (L1), and the second stopper (360) is arranged to limit the expansion of the first spring (330) when the first spring (330) has a second predetermined length (L2). The first platform (310) is adjustable along an axis (A) extending between the first platform (310) and the second platform (320) such to adjust the first predetermined length (L1) and the second predetermined length (L2).

Fig. 3

EP 4 707 634 A1

## Description

## TECHNICAL FIELD

The present disclosure generally relates to the field of vehicle shock absorbers and particularly to a spring system for providing a shock absorber with a variable spring rate. The disclosure further relates to a shock absorber comprising the spring system and to a method for regulating a variable spring rate of a shock absorber.

## TECHNICAL BACKGROUND

Spring-based shock absorbers for vehicles may advantageously have a softer spring rate in the middle of its stroke length than at the outer ends thereof. This is desirable for improving ride quality while simultaneously preventing the vehicle from moving too far from the riding position when the vehicle is exposed to load changes and chassis oscillations. To achieve such a softer spring rate in the middle of the stroke length, shock absorbers are commonly equipped with additional springs for increasing spring stiffness at the outer ends of the stroke. For example, to increase spring stiffness upon compression, an additional spring may be mounted in series with the spring of the shock absorber. When one of the springs bottoms, the spring rate increases. Similarly, for increasing spring stiffness upon expansion, another additional spring may be mounted on the shock absorber which compresses upon expansion of the shock absorber.

However, the use of multiple springs in shock absorbers often results in a large number of components that must be precisely adjusted to provide the desired variable spring rate. Such rather complex spring systems have thus become difficult to re-adjust to suit changing driving conditions, such as road quality or speed. Accordingly, there is a demand for an improved spring system for a shock absorber for delivering a variable spring stiffness.

## SUMMARY OF THE DISCLOSURE

At least some of the above-mentioned drawbacks are at least partly overcome by the present disclosure according to the independent claims. Preferred embodiments are set forth in the dependent claims. It would be advantageous to improve the capacity of spring systems used for controlling the spring stiffness of a damper. To better address this concern, in accordance with a first aspect of the disclosure, there is provided a spring system for a vehicle shock absorber, the spring system comprising a first platform and a second platform which is movable relative to the first platform. The spring system further comprises a first spring arranged in abutment with the first platform and a second spring, coupled in series with the first spring and arranged in abutment with the second platform. The spring system further comprises a first stopper and a second stopper. The first stopper is arranged to limit the compression of the first spring when the first spring has a first predetermined length, and the second stopper is arranged to limit the expansion of the first spring when the first spring has a second predetermined length. The first platform is adjustable along an axis extending between the first platform and the second platform such to adjust the first predetermined length and the second predetermined length. The inventive concept is based on the realisation that by coupling the first and the second springs in series, their combined spring rate may define a global spring rate of a shock absorber. Thereby, by controlling the first spring to be limited in compression and expansion beyond certain points, the global spring stiffness may be soft in the middle and increased at the outer ends of the stroke length of the shock absorber. Importantly, the first platform being adjustable provides the spring system with the ability to, by one single adjustment, simultaneously adjust a first breaking point at which the first spring is limited from further compression, and a second breaking point at which the first spring is limited from further expansion. Thus, the disclosed spring system provides a variable spring rate over the stroke length of a shock absorber, where, by adjusting a single component, the two breaking points at which the spring rate changes can be moved simultaneously. Being able to adjust both breaking points simultaneously is advantageous for quickly adapting the vehicle to a change of driving conditions, for example due to load, or piston shaft velocity. Being able to adjust the first platform is further advantageous for changing the ride height of the vehicle. Providing a variable spring stiffness so that it has a soft zone at normal ride height of a vehicle, and an increased spring rate for both compression and expansion, is further advantageous for reaching a better comfort level at normal ride height, while preventing big chassis movements. In addition, the present disclosure provides a spring system that, as opposed to a regular spring system providing a single spring, faster returns a vehicle to ride height. Further, the spring system may advantageously reduce the roll of the vehicle. This because when a vehicle is moving in roll, increased spring stiffness deeper into the compression stroke and further out in the rebound stroke will enhance the vehicle's resistance to roll. The terms the first predetermined length and the second predetermined length each refers to two distinct lengths of the first spring. The spring system is arranged such that when the first spring is compressed to the first predetermined length it is stopped from further compression by the first stopper, and when the first spring is extended to the second predetermined length it is stopped from further extension by the second stopper. When the first spring is at the second predetermined length, it is longer than when it is at the first predetermined length. The first spring can extend to any length between the first predetermined length and the second predetermined length.

In accordance with an embodiment, the first stopper is adjustable along the axis such to adjust the first predetermined length. This is advantageous for providing the spring system with the ability to control at what predetermined length the first spring may be prevented from further compression without affecting the second predetermined length. Thus, the spring system enables the range of the middle zone to be adjusted to be longer or shorter. This may be advantageous for enabling the spring rate to increase if the vehicle is just above ride height, allowing a soft compression stroke for a certain distance before becoming stiff. Or the other way around.

In accordance with an embodiment, each of the first platform and the first stopper is adjustable relative to each other. Thereby, the first predetermined length and the second predetermined length may be adjusted independently from each other.

In accordance with an embodiment, each of the first stopper and the second stopper is arranged between the first platform and the second platform. This provides for a space efficient solution. Additionally, the first spring and the second spring do not necessarily have to be attached to any of the first platform or the second platform, since the springs may be preloaded between the first platform and the second platform. Thus, the expansive force from the spring may keep them in place.

In accordance with an embodiment, each of the first spring and the second spring is a compression spring. A compression spring is advantageously used because of its ability to efficiently absorb and dissipate energy, reducing the impact force and providing stability and comfort to the spring system and to a shock absorber onto which the spring system is mounted.

In accordance with an embodiment, the spring system comprises a tubular part, wherein the second stopper is fixedly coupled with the tubular part, and the first platform is movably coupled with the tubular part. The tubular part provides for protection as well as a robust structure to which the second stopper and the first platform may be moveably attached.

In accordance with an embodiment, the first stopper is movably coupled with the tubular part. This provides for a robust structure to which the first stopper may be attached.

In accordance with an embodiment, the tubular part extends around a radially inner circumference of the first spring and has a longitudinal extension in the direction of the axis. This is advantageous in that the tubular part may provide protection for the shock absorber onto which it is mounted without enclosing the springs. Positioning the tubular part radially inwards of the first spring, rather than radially outwards thereof, is also advantageous since it requires less material due to the smaller surface area proportional to its radius. This results in a more cost efficient and less bulky design. It is further advantageous in terms of accessibility for repair and maintenance in that it allows a user to visually see the springs and thereby determine if any of the springs requires reparation or replacement.

In accordance with an embodiment, the tubular part extends around a radially outer circumference of the first spring and has a longitudinal extension in the direction of the axis. This is advantageous in that the tubular part may provide protection for the first spring and the second spring against damage caused by exterior objects such as stones or sand that may hit the spring during use of the shock absorber onto which the spring system is mounted.

In accordance with an embodiment, the tubular part is arrangeable to be connected to a cylinder tube of a shock absorber onto which the spring system is mountable, and to extend around a portion of a longitudinal extension of the cylinder tube, wherein the tubular part is arrangeable to be adjustable along the axis relative the cylinder tube. The term cylinder tube, as used herein, may typically refer to the cylindrical component that houses the piston and hydraulic fluid. The tubular part may therefore protect at least a portion of the cylinder tube against damages. In addition, the tubular part being adjustable along the axis relative the cylinder tube is advantageous for increasing ride height without changing the spring preload of the spring system. For example, by adjusting the tubular part downwards relative the cylinder tube, the tensioning of the first spring and the second spring will maintain the distance between the first platform and the second platform. Thereby, this adjustment may result in that the cylinder tube moves upwards, which may increase the vehicle ride height. This may be done without changing the preload of the first and second springs, nor the stroke length of the first and second spring. Thus, the vehicle height can be increased without altering the first or the second predetermined length, ensuring that the first and second breaking points remain unchanged, thereby preserving the spring rate characteristics of the spring system.

In accordance with an embodiment, the tubular part is arrangeable to be fixedly coupled to a second mounting bracket and a piston shaft of a shock absorber onto which the spring system is mountable, and to extend around a longitudinal extension of the piston shaft. This is advantageous in that the tubular part may protect the piston shaft of a shock absorber onto which the spring system is mounted against damages. Additionally, this may be advantageous for preventing dirt such as sand, water, or similar, to enter the cylinder tube via the opening of the cylinder tube where the piston shaft enters. Even further, having the tubular part encircling, or at least partly encircling the piston shaft, instead of the cylinder tube, and thereby freeing up space around the cylinder tube, is advantageous for improving the dissipation of heat (due to piston movement) from the cylinder tube. Also, the tubular part provides a robust structure to which the first platform, the first stopper, and second stopper may be attached. Also, the tubular part encircling, or at least partly encircling the piston shaft may be arranged to allow pumping or directing air to a portion of the cylinder tube that is covered by the tubular part, thereby providing an additional cooling effect thereto.

In accordance with an embodiment, the spring system further comprises a spring guide which is movably arranged relative to the first platform and arranged between the first spring and the second spring. Further, the first platform and first stopper are arrangeable to stop the compression of the first spring by the first stopper engaging the spring guide, and the first platform and the second stopper are arrangeable to stop the expansion of the first spring by the second stopper engaging the spring guide. This is advantageous in that it provides a means to prevent the first spring from compressing beyond the first predetermined length and/or extending beyond the second predetermined length. In addition, it may provide for that the springs are connected in series via a platform extending perpendicularly to the stroke direction. This is advantageous in that it provides stability and robustness to the spring system.

In accordance with an embodiment, the spring guide is movably coupled with the tubular part, such that it is movable in the direction of the axis relative to the tubular part. The spring guide may advantageously be connected to the tubular part to provide for a smooth motion along the stroke direction of the spring system.

In accordance with a second aspect of the disclosure, there is provided a shock absorber comprising a spring system as disclosed herein.

In accordance with a third aspect of the disclosure, there is provided a method for regulating a spring system of a shock absorber. The method comprises providing a shock absorber comprising a spring system as disclosed herein; loading the shock absorber such that the first spring and the second spring are compressed, adjusting the first platform to adjust the first predetermined length and the second predetermined length. This provides for an efficient method for providing a variable spring rate in a shock absorber and regulating the breaking points of where the spring rate varies in the compression stroke and the rebound stroke. When the vehicle is loaded, the first platform may be adjusted to keep the position of a first and a second breaking point for spring rate change as well as keeping the ride height. The first breaking point, as referred to herein, corresponds to the point at which the first spring is limited from further compression and thereby from which the variable spring rate increases in the compression stroke. Correspondingly, the second breaking point corresponds to the point at which the first spring is limited from further expansion and thereby from which the variable spring rate increases in the rebound stroke. The method thereby allows for regulating spring rate efficiently to provide high comfort at ride height and prevent big chassis movements. Effects and features of the second and third aspects are largely analogous to those described above in connection with the first aspect. Embodiments mentioned in relation to the first aspect are largely compatible with the second and third aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

**BRIEF DESCRIPTION OF THE DRAWINGS**

The disclosure is described in the following illustrative and non-limiting detailed description of exemplary embodiments, with reference to the appended drawings, wherein:

Fig. 1 is a schematic illustration of a spring system mounted on a shock absorber according to an embodiment of the present disclosure.

Fig. 2a is a schematic illustration of a spring system mounted on a shock absorber according to an embodiment of the present disclosure.

Fig. 2b is a schematic illustration of a spring system mounted on a shock absorber according to an embodiment of the present disclosure.

Fig. 3 is a schematic illustration of a spring system mounted on a shock absorber according to an embodiment of the present disclosure.

Figs. 4a-b show schematic illustrations of a spring system mounted on a shock absorber according to an embodiment of the present disclosure.

Fig. 5 presents a diagram visualizing the change of spring rate of a spring system of the present disclosure.

Fig. 6 shows a schematic flow chart of a method according to an embodiment of the third aspect of the present disclosure.

**DETAILED DESCRIPTION OF EMBODIMENTS**

Hereinafter, the disclosure in various aspects will be described with reference to the illustrative drawings. All figures are schematic, not necessarily to scale, and generally only show parts which are necessary in order to elucidate the disclosure, wherein other parts may be omitted or merely suggested. Throughout the figures the same reference signs designate the same, or essentially the same features. Various elements and arrangements are schematically depicted in the drawings for purposes of explanation only and so as to not obscure the description with details that are well known to those skilled in the art. Nevertheless, the attached drawings are included to describe and explain illustrative examples of the disclosed subject matter.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

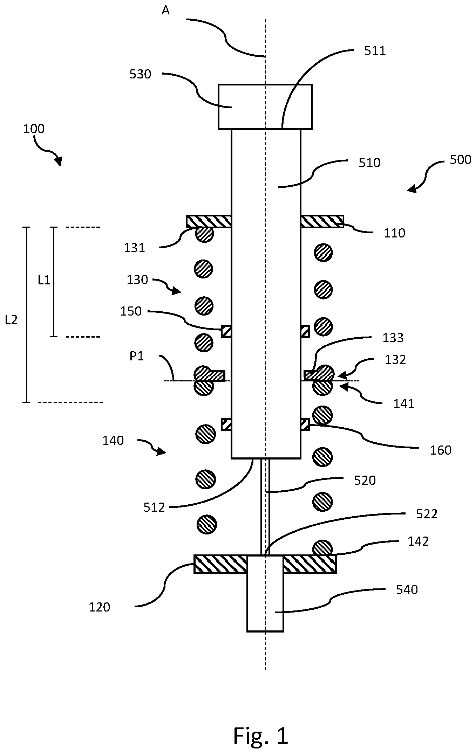

Fig.1 shows a spring system 100 for a vehicle shock absorber according to a first aspect of the present disclosure. The spring system 100 comprises a first platform 110 and a second platform 120 which is movable relative to the first platform 110. The spring system 100 further comprises a first spring 130 arranged in abutment with the first platform 110, and a second spring 140 which is coupled in series with the first spring 130 and arranged in abutment with the second platform 120. The spring system 100 further comprises a first stopper 150 and a second stopper 160. The first stopper 150 is arranged to limit the compression of the first spring 130 when the first spring has a first predetermined length L1, and the second stopper 160 is arranged to limit the expansion of the first spring 130 when the first spring 130 has a second predetermined length L2. The first platform 110 is adjustable along an axis A extending between the first platform 110 and the second platform 120 such to adjust the first predetermined length L1 and the second predetermined length L2. In the exemplified embodiment, the spring system 100 is mounted on a shock absorber 500. The shock absorber 500 comprises a cylinder tube 510 which extends from a first end 511, to a second end 512, which second end 512 is opposite the first end 511. The cylinder tube 510 has a longitudinal extension along the axis A. The cylinder tube 510 provides a cylindrical housing that encases a piston (not shown) of the shock absorber 500 and hydraulic fluid, providing a sealed environment wherein the piston may operate efficiently. The cylinder tube 510 may provide a smooth and controlled movement of the piston, enabling effective damping by the shock absorber 500. The shock absorber 500 further comprises a piston shaft 520. The piston shaft 520 may be a robust, cylindrical shaft that connects the piston to an external structure of the shock absorber 500. The piston shaft 520 moves within the cylinder tube 510, guiding the piston's motion and may ensure smooth transfer of hydraulic pressure for effective damping.

The piston shaft 520 extends along the axis A, from a first end (not shown) within the cylinder tube 510, to a second end 522. The shock absorber 510 further comprises a first mounting bracket 530 connected to the first end 511 of the cylinder tube 510. The first mounting bracket 530 may be a structural component for securely attaching an upper portion of the shock absorber 500 to the vehicle's chassis or suspension, ensuring proper alignment and stability. The first mounting bracket 530 is only conceptually shown and should not be considered to represent the exact shape of the first mounting bracket 530. The first mounting bracket 530 may provide a fixed point for the shock absorber 500 to pivot and function effectively, absorbing and dampening vibrations and shocks. The shock absorber 510 further comprises a second mounting bracket 540 connected to the second end 522 of the piston shaft 520. The second mounting bracket 540 may be a structural component for securely attaching a lower portion of the shock absorber 500 to the vehicle's chassis or suspension. The second mounting bracket 540 is only conceptually shown and should not be considered to represent the exact shape of the first mounting bracket 530. For reference purposes, in all figures, an upward direction is defined as a direction along the axis A from the second mounting bracket 540 towards the first mounting bracket 530. A downward direction is defined as the opposite of the upward direction.

In Figs. 1. 2a, 2b, and 3, the shock absorber 500 is shown in its state of ride height, which is the normal position it maintains when the vehicle, on which the shock absorber with spring system is mounted, is at rest or in steady motion under typical load conditions. Now with continued reference to Fig. 1, the first platform 110 is mounted on the cylinder tube 510. The first platform 110 is movably connected to the cylinder tube 510 so that it may be moved along the axis A relative the cylinder tube 510. The first platform 110 may for example be movably connected to the cylinder tube 510 using a screw mechanism. The screw mechanism may provide internal threads in a hole of the first platform 110. The cylinder tube 510 may provide corresponding external threads that engage with the internal threads of the first platform 110. As the first platform 110 is rotated, the platform moves linearly along the first axis A along the cylinder tube 510, allowing precise adjustment and secure positioning. This mechanism may ensure a controlled and stable movement of the first platform 110 relative to the cylinder tube 510. Alternatively, the first platform 110 may be movably connected to the cylinder tube 510 by having a hole that fits the circumference of the cylinder tube 510, effectively forming a short sleeve around the cylinder tube 510. This design enables the first platform 110 to slide smoothly along the length of the cylinder tube 510 while maintaining alignment and stability. The first platform 110 may be adjustable to move along the axis A relative the hydraulic cylinder 510 using hydraulic means. The hydraulic means may include an actuating piston whose movement is controlled by hydraulic pressure from an actuator. The actuating piston may apply pressure at the first platform 110 such to move it relative the cylinder tube 510, along the axis A in either direction thereof. The second platform 120 is in the shown embodiment connected to the second mounting bracket 540. The second platform 120 may be rigidly connected to the second mounting bracket 540. The second mounting bracket 540 is connected to the piston shaft 520, which is movably connected to the cylinder tube 510. Thus, the second platform 120 is movable with respect to the first platform 110. The first spring 130 extends along the axis A, from a first end 131, to a second end 132. The first end 131 of the first spring 130 abuts the first platform 110. The first spring 130 may be a compression spring. The first spring 130 may be a coil spring. The second spring 140 extends along the axis A, from a first end 141, to a second end 142. The second end 142 abuts the second platform 120. The second spring 140 may a compression spring. The second spring 140 may be a coil spring. The first spring 130 is coupled in series with the second spring 140. In the exemplified embodiment, the second end 132 of the first spring 130 abuts the first end 141 of the second spring 140. It is conceivable that an intermediate element is provided between the second end 132 of the first spring 130 and the first end 141 of the second spring 140 to provide a more reliable and stable connection. A plane P1, which extends perpendicularly to the axis A, visualizes a connection between the first spring 130 and the second spring 140. In the exemplified embodiment, the first spring 130 comprises a first spring protrusion 133 at its second end 132. The first spring protrusion 133 projects inwardly, from the first spring 130, towards the first axis A. The first spring protrusion 133 may extend circumferentially, around the axis A. The first spring protrusion 133 may partially extend circumferentially, around the axis A. The first stopper 150 is in the shown embodiment arranged on the cylinder tube 510 of the shock absorber 500. The first stopper 150 is shaped such to limit compression of the first spring 130 when the first spring has a length corresponding to the first predetermined length L1. In the exemplified embodiment, the first stopper 150 prevents the first spring protrusion 133 from moving past the first stopper 180. The first spring protrusion 133, when moving upwards, may abut against the first stopper 150, and thereby prevents the compression of the first spring 130 to a length that is shorter than the first predetermined length L1. Thus, during use in a vehicle, when the shock absorber 500, and thus also the spring system 100, is compressed from the state of ride height, the first platform 110 and the second platform 120 move towards each other, and the first spring 130 and the second spring 140 are compressed. In this embodiment, the first spring 130 has a lower spring rate that the second spring 140. As a result, the first spring protrusion 133 will move more towards the first stopper 150 during compression and more towards the second stopper 160 during extension, compared to if the first and second springs have similar spring rates. Alternatively, a higher spring rate may be used on the first spring 130 than on the second spring 140. As a result, the first spring protrusion 133 will move less towards the first stopper 150 during compression and less towards the second stopper 160 during extension, compared to if the first and second springs have similar spring rates. When the first spring 130 is compressed so that it has a length corresponding to the first predetermined length L1, the first spring protrusion 133 abuts the first stopper 150. The first spring 130 is thereby prevented from moving further upwards. Thereby, the first stopper 150 limits the first spring 130 by preventing it from being compressed to a length that is shorter than the first predetermined length L1. If the spring system 100 is further compressed the first spring 130 will remain at the first predetermined length L1 and the second spring 140 will be further compressed. The second stopper 160 is arranged at the cylinder tube 510. The second stopper 160 is shaped such to limit expansion of the first spring 130 when the first spring has a length corresponding to the second predetermined length L2. In the exemplified embodiment, the second stopper 160 prevents the first spring protrusion 133 from moving past the second stopper 160. Thus, when the shock absorber 500 (and thus also the spring system 100) is expanded from the state of ride height, the first platform 110 and the second platform 120 move away from each other, and the first spring 130 and the second spring 140 are expanded. When the first spring 130 is expanded so that it has a length corresponding to the second predetermined length L2, the first spring protrusion 133 abuts the second stopper 160. The first spring 130 is thereby prevented from moving further downwards. Thereby, the second stopper 150 limits the first spring 130 to expand beyond a length that is longer than the second predetermined length L2. If the spring system 100 is further expanded, the first spring 130 will remain at the second predetermined length L2 and the second spring 140 will be further expanded. In the exemplified embodiment, each of the first stopper 150 and the second stopper 160 is arranged between the first platform 110 and the second platform 120. When the shock absorber 500 is in the state of ride height, the spring system 100 is within a second zone. The second zone is defined as a range of the stroke length of the spring system 100 when the first spring 130 has a length between the first predetermined length L1 and the second predetermined length L2. Thus, when the spring system 100 is within the second zone, the first spring 130 is able to compress and expand. Thereby the combined spring rate $k_{combined}$ of the first spring 130 and second spring 140, when coupled in series, can be expressed using the formula for springs in series. Provided that the first spring 130 has a first spring rate k1 and the second spring 140 has a second spring rate k2, the combined spring rate $k_{combined}$ is given by:

$$K_{combined} = (k1*k2)/(k1+k2)$$

This means that the combined spring rate $k_{combined}$ is lower than either of the first spring rate k1 and the second spring rate k2, resulting in a lower spring rate than from either spring alone. The spring rate of the spring system 100 is referred to as the global spring rate $k_{global}$. When the shock absorber 500, and thus also the spring system 100, is compressed from the state of ride height, both the first and second springs 130, 140 are compressed. The spring system 100 is then within the second zone and the global spring rate $k_{global}$ is then equal to the combined spring rate $k_{combined}$. When the first spring 130 is compressed so that its length equals the first predetermined length L1, the first stopper 150 limits further compression of the first spring 130. From this stage, if the shock absorber 500 is further compressed, and thus also the spring system 100, only the second spring 140 is further compressed. The spring system 100 is then within a third zone where the global spring rate $k_{global}$ is equal to the second spring rate k2. This is because the first spring 130 is prevented from being further compressed, making it stiff. Thus, when the spring system 100 moves from the second zone into to the third zone, the global spring rate $k_{global}$ increases. When the shock absorber 500, and thus also the spring system 100, is expanded from the state of ride height, both the first the second springs 130, 140 are expanded. The spring system 100 is then in the second zone and the global spring rate $k_{global}$ is then equal to the combined spring rate $k_{combined}$. When the first spring 130 is expanded so that its length equals the second predetermined length L2, the second stopper 160 limits further expansion of the first spring 130. From this stage, if the shock absorber 500 is further expanded, and thus also the spring system 100, only the second spring 140 is further expanded. This is because the first spring 130 is prevented from being further expanded, making it stiff. The spring system 100 is then in a first zone where the global spring rate $k_{global}$ is equal to the second spring rate k2. Thus, when the spring system 100 moves from the second zone into to the first zone, the global spring rate $k_{global}$ increases. The point where the spring system 100 changes between being in the first zone and the second zone, and thus when the global spring stiffness changes from being equal to the second spring rate K2 to being equal to the combined spring rate $K_{combined}$, is referred to as the first breaking point. The point where the spring system 100 changes between being in the second zone and the third zone, and thus when the global spring stiffness changes from being equal to the combined spring rate $K_{combined}$ to being equal to the second spring rate K2, is referred to as the second breaking point. Accordingly, the present disclosure provides for a variable spring rate where the spring rate is soft in the middle of a stroke, and stiffer at the ends of the stroke. The first spring 130 is advantageously preloaded when the shock absorber 500 is fully expanded. The second spring 140 is advantageously preloaded when the shock absorber 500 is fully expanded. In the exemplified embodiment, the first platform 110 is adjustable relative the cylinder tube 510. The first platform 110 is advantageously adjustable along the axis A relative the first stopper 150 and the second stopper 160. This for adjusting the first predetermined length L1 and the second predetermined length L2. Thus, by adjusting a single component, in this case the first platform 110, the first and second breaking points may be adjusted simultaneously. The spring system 100 may thus advantageously be adjusted so that the ride height is in the middle of the second zone. For example, when a vehicle is loaded, the ride height is lowered. This means that the spring system 100 becomes more prone to enter the third zone and less prone to enter the first zone in relation to before the vehicle received the load. To compensate for the load, the first platform 110 may be adjusted downwards to increase the preload of the first and second springs 130, 140. The adjustment of the first platform 110 also results in that the first and second predetermined lengths L1, L2 are reduced, resulting in that the spring system 100 is less prone to enter the third zone and more prone to enter the first zone. Accordingly, the adjustment of the first platform 110 may be done to compensate for the increased load. Similarly, if a vehicle is unloaded, the ride height is increased. This means that the spring system 100 is less prone to enter the third zone and more prone to enter the first zone in relation to before the vehicle was unloaded. To compensate for the removal of load, the first platform 110 may be adjusted upwards to reduce the preload of the first and second springs 130, 140. The adjustment of the first platform 110 results in that the first and second predetermined lengths L1, L2 are increased, resulting in that the spring system 100 is more prone to enter the third zone and less prone to enter the first zone. Accordingly, the adjustment of the first platform 110 may be done to compensate for the removal of load.

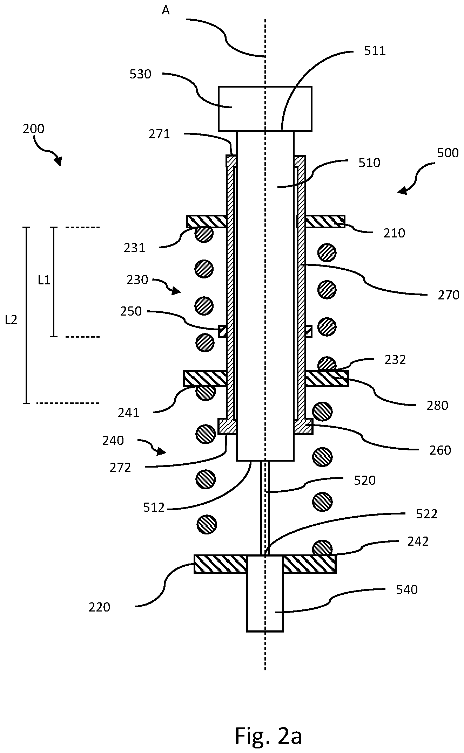

Now with reference to Fig. 2a, a second embodiment of the present disclosure is shown. Fig. 2a shows a spring system 200 for a vehicle shock absorber. The spring system 200 comprises a first platform 210 and a second platform 220 which is movable relative to the first platform 210. The spring system 200 further comprises a first spring 230 arranged in abutment with the first platform 210, and a second spring 240 which is coupled in series with the first spring 230 and arranged in abutment with the second platform 220. The spring system 200 further comprises a first stopper 250 and a second stopper 260. The first stopper 250 is arranged to limit the compression of the first spring 230 when the first spring has a first predetermined length L1, and the second stopper 260 is arranged to limit the expansion of the first spring 230 when the first spring 230 has a second predetermined length L2. The first platform 210 is adjustable along an axis A extending between the first platform 210 and the second platform 220 such to adjust the first predetermined length L1 and the second predetermined length L2. In the exemplified embodiment, the spring system 200 is mounted on the shock absorber 500. The spring system 200 further comprises a tubular part 270. The second stopper 260 is fixedly coupled with the tubular part 270, and the first platform 210 is movably coupled with the tubular part 270. More particularly, in this embodiment, the second stopper 260 is integral with the tubular part 270. The tubular part 270 extends from a first end 271, along the axis A, to a second end 272. The tubular part 270 is connected to the hydraulic cylinder 510 at the first and second ends 271, 272 thereof. Alternatively, the tubular part 270 may be connected to the hydraulic cylinder 510, at only one of the first and second ends 271, 272, thereof. Alternatively, the tubular part 270 may be connected to the hydraulic cylinder 510 at a portion thereof between the first end 271 and the second end 272, or a combination of the above. In the shown embodiment, the tubular part 270 extends circumferentially around the hydraulic cylinder 510. The tubular part 270 may be made of aluminium. Alternatively, the tubular part 270 may be made of steel, magnesium, or a plastic. The first platform 210 is mounted on the tubular part 270. The first platform 210 is movably connected to the tubular part 270 so that it may be moved along the axis A relative the tubular part 270. The first platform 210 may for example be movably connected to the tubular part 270 using a screw mechanism. Alternatively, the first platform 210 may be movably connected to the tubular part 270 by having a hole that fits the circumference of the tubular part 270, effectively forming a short sleeve around the tubular part 270. The first platform 210 may be adjustable to move along the axis A relative the tubular part 270 using hydraulic means. The second platform 220 is connected to the second mounting bracket 540. The first spring 230 extends along the axis A, from a first end 231, to a second end 232. The first end 231 of the first spring 230 abuts the first platform 210. The second spring 240 extends along the axis A, from a first end 241, to a second end 242. The second end 242 abuts the second platform 220. The first spring 230 is coupled in series with the second spring 240. The spring system 200 further comprises a spring guide 280. The spring guide 280 is movably arranged relative to the first platform 210 and arranged between the first spring 230 and the second spring 240. Further, the first platform 210 and first stopper 250 are arrangeable to stop the compression of the first spring 230 by the first stopper engaging the spring guide 280. The first platform 210 and the second stopper 260 are arrangeable to stop the expansion of the first spring 230 by the second stopper 260 engaging the spring guide 280. The spring seat 280 is movably coupled with the tubular part 270, such that it is movable in the direction of the axis A relative to the tubular part 270. In an alternative embodiment, it is conceivable that the spring guide is movably coupled with the cylinder tube 510, such that it is movable in the direction of the axis A relative the cylinder tube 510. Thus, the spring system 100 shown in Fig. 1 may in an embodiment further comprise a spring guide 280 between the first spring and the second spring 130, 140.

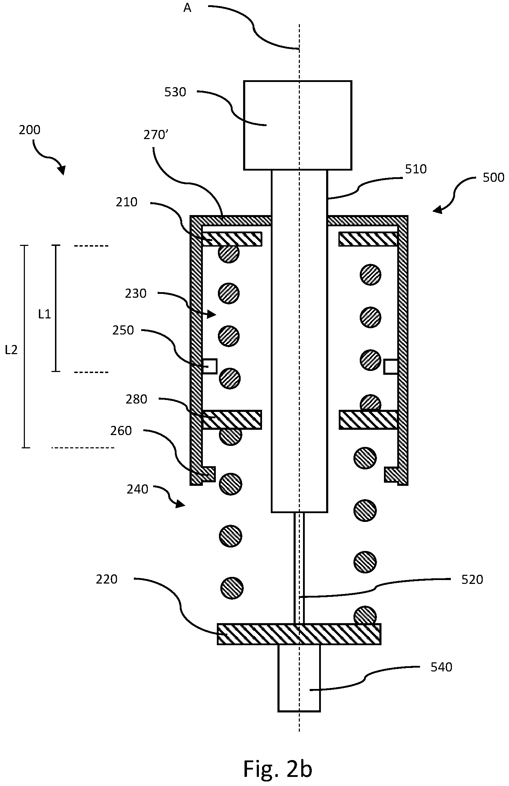

Now with further reference to Fig. 2a. The spring guide 280 is a circular structure designed to fit around the tubular part 270. The spring guide 280 is further adapted to move relative the tubular part 270 along the axis A. The spring guide 280 is preferably adapted in shape such to allow a smooth movement relative the tubular part 270. The spring guide 280 may comprise additional stabilizing elements, like e.g. brackets, to maintain alignment and prevent tilting. The second end 232 of the first spring 230 abuts an upper side of the spring guide 280. The first end 241 of the second spring 240 abuts a lower end of the spring guide 280. Thereby the first spring 230 and the second spring 240 may be coupled in series between the first platform 210 and the second platform 220. In this embodiment, the first spring 230 has a lower spring rate than the second spring 240. As a result, the first spring guide 280 will move more towards the first stopper 250 during compression and more towards the second stopper 260 during extension, compared to if the first and second springs have similar spring rates. Alternatively, a higher spring rate may be used on the first spring 230 than on the second spring 240. As a result, the spring guide 280 will move less towards the first stopper 250 during compression and less towards the second stopper 260 during extension, compared to if the first and second springs have similar spring rates. The first stopper 250 is arranged on the tubular part 270. The first stopper 250 is adapted in shape such to limit compression of the first spring 230 when the first spring 230 has a length corresponding to the first predetermined length L1. In the exemplified embodiment, the first stopper 250 prevents the spring guide 280 from moving past the first stopper 250. Thus, when the shock absorber 500 (and thus also the spring system 200) is compressed from the state of ride height, the first platform 210 and the second platform 220 move towards each other, and the first spring 230 and the second spring 240 are compressed. When the first spring 230 is compressed so that it has a length corresponding to the first predetermined length L1, the spring guide 280 abuts the first stopper 250. The spring guide 280 is thereby prevented from moving further upwards. Thereby, the first stopper 250 limits the first spring 230 to further compress and, thus, prevents the first spring 230 from reaching a length that is shorter than the first predetermined length L1. The second stopper 260 is arranged on the tubular part 270. The second stopper 260 is adapted in shape so to limit expansion of the first spring 230 when the first spring 230 has a length corresponding to the second predetermined length L2. In the exemplified embodiment, the second stopper 260 prevents the spring guide 280 from moving past the second stopper 260. Thus, when the shock absorber 500 (and thus also the spring system 200) is expanded from the state of ride height, the first platform 210 and the second platform 220 move away from each other, and the first spring 230 and the second spring 240 are expanded. When the first spring 230 is expanded so that it has a length corresponding to the second predetermined length L2, the spring guide 280 abuts the second stopper 260. The spring guide 280 is thereby prevented from moving further downwards. Thereby, the second stopper 250 limits the first spring 230 to expand to a length that is longer than the second predetermined length L2. In the exemplified embodiment, the tubular part 270 extends around a radially inner circumference of the first spring 230 and has a longitudinal extension in the direction of the axis A. Alternatively, in another embodiment shown in Fig. 2b, the tubular part 270' extends around a radially outer circumference of the first spring 230 and has a longitudinal extension in the direction of the axis A.

Now with reference to Fig. 2a. In accordance with an embodiment, the first stopper 250 is adjustable along the axis A such to adjust the first predetermined length L1. The first stopper 250 may be adjustable to move along axis A relative the tubular part 270 to adjust the first predetermined length L1. The first stopper 250 may be adjustable relative the tubular part 270 by screwing means. Alternatively, the first stopper may be adjustable relative the tubular part 270 by hydraulic means. The first stopper 250 is, thus, movably coupled with the tubular part 270. Each of the first platform 210 and the first stopper 250 may be adjustable relative to each other. The first stopper 250 may be adjustable by screw means or hydraulic means. The second stopper 260 is arranged at the tubular part 270, at the second end 272 thereof. More particularly, in the embodiment shown in Fig. 2a, the second stopper 260 constitutes a portion of the tubular part 270 projecting outwardly from the outer wall of the tubular part 270 in a direction perpendicular to the axis A. Correspondingly, in the embodiment shown in Fig. 2b, the second stopper 260 constitutes a portion of the tubular part 270' projecting inwardly from the inner wall of the tubular part 270' and towards the axis A. The tubular part 270' is here connected to the cylinder tube 510 and extends around a portion of a longitudinal extension of the cylinder tube 510. The tubular part 270' is further arrangeable to be adjustable along the axis A relative the cylinder tube 510. The tubular part 270' may be adjustable relative the cylinder tube 510 by screw means. Alternatively, the tubular part 270' may be adjustable relative the cylinder tube by hydraulic means. The spring system 200 can change its global spring stiffness $k_{global}$ in a similar way as described with reference to the spring system 100 shown in Fig. 1 between a first, second, and third zone.

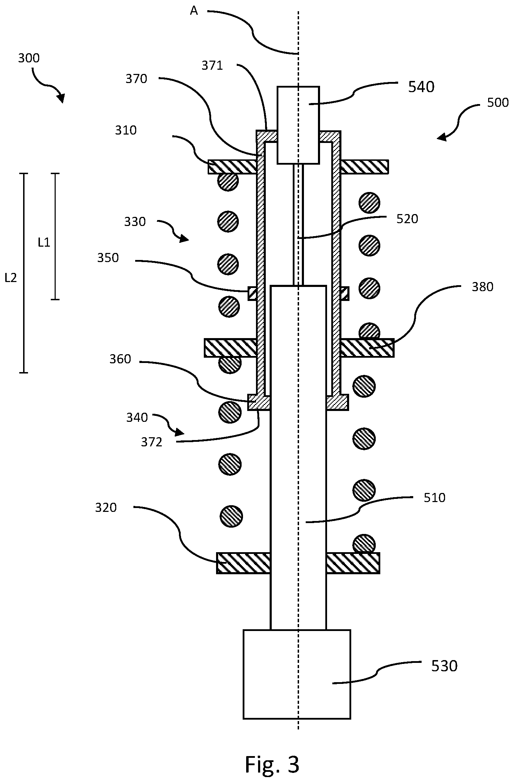

Now with reference to Fig. 3, a further embodiment of the present disclosure is shown. Fig. 3 shows a spring system 300 mounted on a vehicle shock absorber 500. The spring system 300 comprises a first platform 310 and a second platform 320 which is movable relative to the first platform 310. The spring system 300 further comprises a first spring 330 arranged in abutment with the first platform 310, and a second spring 340 which is coupled in series with the first spring 330 and arranged in abutment with the second platform 320. The spring system 300 further comprises a first stopper 350 and a second stopper 360. The first stopper 350 is arranged to limit the compression of the first spring 330 when the first spring has a first predetermined length L1, and the second stopper 360 is arranged to limit the expansion of the first spring 330 when the first spring 330 has a second predetermined length L2. The first platform 310 is adjustable along an axis A extending between the first platform 310 and the second platform 320 such to adjust the first predetermined length L1 and the second predetermined length L2. In the exemplified embodiment, the spring system 300 further comprises a tubular part 370, and the second stopper 360 is fixedly coupled with the tubular part 370. More particularly, the second stopper 360 constitutes an integral end portion of the tubular part 370 which protrudes outwardly from the outer wall of the tubular part 370 away from the axis A. The skilled person understands, however, in light of this disclosure that providing a second stopper 360 which is a separate element fixedly coupled with the tubular part 370 is also possible within the concept of the present disclosure. The first platform 310 is movably coupled with the tubular part 370. The tubular part 370 extends from a first end 371, along the axis A, to a second end 372. The tubular part 370 is connected to a second mounting bracket 540 at its first end 371. The tubular part 370 may be adjustable relative the second mounting bracket 540 by screw means. The tubular part 370 may be movably connected, at its second end 372, to the cylinder tube 510 of the shock absorber 500. The tubular part 370 extends circumferentially around a portion of the hydraulic cylinder 510 and around the piston shaft 520. That is, in this embodiment, the tubular part 370 extends around and along the longitudinal extension of the piston shaft 520, thereby providing protection of the piston shaft 520 against dirt, rock or similar. By arranging the tubular part 370 accordingly, as shown in Fig. 3, an opening in the cylinder tube 510, where the piston shaft 520 enters the cylinder tube 510, is also protected from dirt which thus is prevented from entering inside the cylinder tube 510. In this exemplified embodiment, the tubular part 370 is fixedly coupled to the second mounting bracket 540. Wherein the second mounting bracket 540 is fixedly coupled to the piston shaft 520 and the tubular part 370 extends around a longitudinal extension of the piston shaft 520. The first platform 310 is mounted on the tubular part 370. The first platform 310 is movably connected to the tubular part 370 so that it may be moved along the axis A relative the tubular part 370. The first platform 310 may for example be movably connected to the tubular part 370 using a screw mechanism. Alternatively, the first platform 310 may be movably connected to the tubular part 370 by having a hole that fits the circumference of the tubular part 370, effectively forming a short sleeve around the tubular part 370. The first platform 310 may be adjustable to move along the axis A relative the tubular part 370 using hydraulic means. The second platform 320 is connected to the hydraulic cylinder 510 of the shock absorber 500. The second platform 320 may be fixedly connected to the hydraulic cylinder 510. The first spring 330 extends along the axis A, from a first end 331, to a second end 332. The first end 331 of the first spring 330 abut the first platform 310. The second spring 340 extends along the axis A, from a first end 341, to a second end 342. The second end 342 abuts the second platform 320. The first spring 330 is coupled in series with the second spring 340. The tubular part 370 encircling, or at least partly encircling the piston shaft 520 may be arranged for pumping or directing air to a portion of the cylinder tube 510 that is covered by the tubular part 510, thereby providing an additional cooling effect thereto. To enable this, the tubular part 370 may be arranged to allow air to enter and exit the interior of the tubular part 370. Air may for example enter from an exterior to the interior of the tubular part 370, via a first end thereof. Which first end is directed towards the second mounting bracket 540. Air may enter the interior of the tubular part 370 via a check valve. Air may thereafter exit the interior of the tubular part 370 at a second end thereof which is directed towards the cylinder tube 520. Air may exit via one or more valves or openings in the tubular part 370 at the second end thereof. Additionally, the tubular part 370 may provide vanes or similar features to enhance airflow entering and exiting the interior of the tubular part 370. The spring system 300 further comprises a spring guide 380. The spring guide 380 is movably arranged relative to the first platform 310 and arranged between the first spring 330 and the second spring 340. Further, the first platform 310 and first stopper 350 are arrangeable to stop the compression of the first spring 330 by the first stopper engaging the spring guide 380. The first platform 310 and the second stopper 360 are arrangeable to stop the expansion of the first spring 330 by the second stopper 360 engaging the spring guide 380. The spring seat 380 is movably coupled with the tubular part 370, such that it is movable in the direction of the axis A relative to the tubular part 370. The first spring 330 and the second spring 340 are coupled in series between the first platform 310 and the second platform 320. The first stopper 350 is arranged on the tubular part 370. The first stopper 350 is shaped such to limit compression of the first spring 330 when the first spring 330 has a length corresponding to the first predetermined length L1. In the exemplified embodiment, the first stopper 350 prevents the spring guide 380 from moving past the first stopper 350 by protruding outwardly from the outer wall of the tubular part 370 away from axis A, thus engaging the spring guide 380 as it is pressed against the first stopper 350. Since the spring guide 380 is arranged at the tubular part 370 and protrudes further than the first stopper 350 from the outer wall of the tubular part 370, the engagement or abutment of the first stopper 350 with the spring guide 380 prevents the spring guide 380 from moving beyond the first stopper 350 along the tubular part 370. The first stopper 350 may be adjustable along the axis A such to adjust the first predetermined length L1. The second stopper 360 is arranged at the tubular part 370. The second stopper 360 is shaped such to limit expansion of the first spring 330 when the first spring 330 has a length according to the second predetermined length L2. The spring system 300 can change its global spring stiffness rate $k_{global}$ in a similar way as that described with reference to the spring system 100 shown in Fig. 1 between a first, second, and third zone.

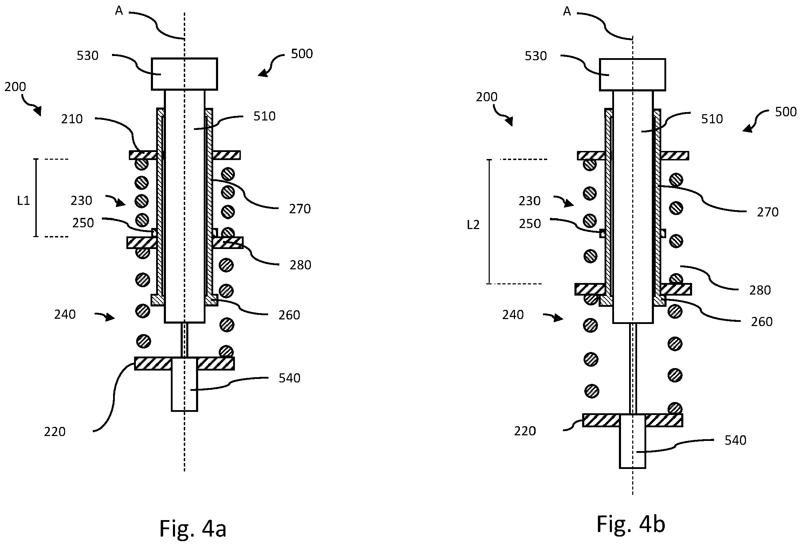

Now with reference to Fig. 4a. The shock absorber 500 previously described with reference to Fig. 2a is shown in a compressed state. The spring system 200 is mounted on the shock absorber 500. The first platform 210 and the second platform 220 are closer to each other relative to when the shock absorber 500 is in the state of ride height, as show in Fig. 2. In the shown state in Fig. 4a, the first spring 230 has been compressed so that it has a length corresponding to the first predetermined length L1. Thereby, the spring guide 280 abuts against the first stopper 250 so that the first stopper 250 prevents the spring guide 280 to move past it. Thus the first spring 230 is prevented from further compressing. The spring system 200, when further compressed, is thereby in the third zone where the global spring rate $k_{global}$ equals the second spring rate k2. The shock absorber 500 is shown at ride height in Fig. 2a, where the first spring 230 is neither limited in compression or expansion, this the spring system 200 is thereby in the second zone where the global sparing rate $k_{global}$ equals the combined spring rate $k_{combined}$.

Now with reference to Fig. 4b. The shock absorber 500 previously described with reference to Fig. 2a is shown in an expanded state. The first platform 210 and the second platform 220 are further away from each other relative to when the shock absorber 500 is at ride height, as show in Fig. 2a. The first spring 230 has been expanded so that it has a length corresponding to the second predetermined length L2. Thereby, the spring guide 280 abuts against the second stopper 260 so that the second stopper 260 prevents the spring guide 280 from moving past it. Thus, the first spring 230 is prevented from further expanding. The spring system 200, when further expanded, is thereby in the third zone where the global spring rate $k_{global}$ equals the second spring rate k2.

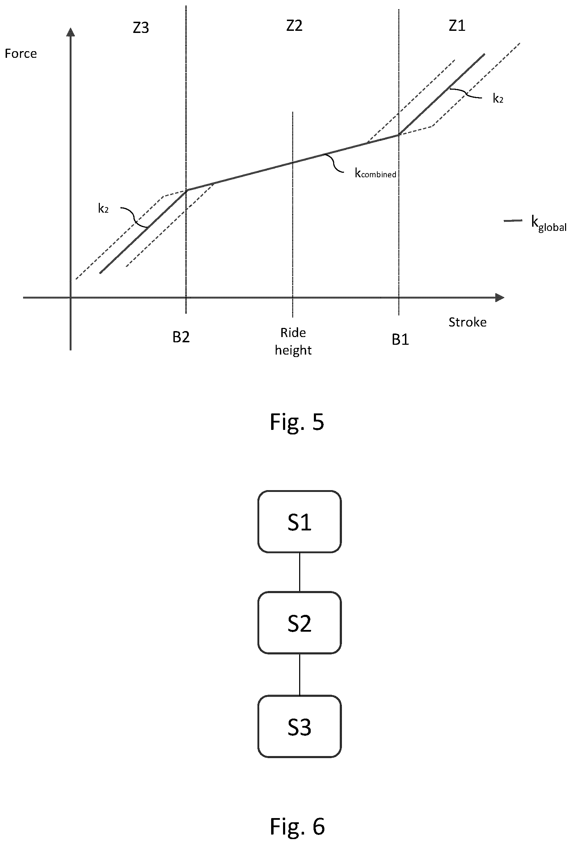

Now with reference to Fig. 5, there is shown a diagram visualising the global spring rate $k_{global}$ as a function of the force compressing the spring system and the stroke distance of the spring system. Moving from left to right in the diagram indicates that the spring system (and so also the shock absorber) is more compressed. Going from bottom to top indicates an increase in the force compressing the spring system (and so also the shock absorber). The global spring rate $K_{global}$ is marked by the thick solid line. The change of the global spring rate $k_{global}$ is visualized over the first, second and third zones Z1, Z2, Z3. As shown by the steepness of thick solid line, the global spring rate $k_{global}$ is higher in the first zone Z1 and the third zone Z3 than in the second zone Z2 (a steeper line indicates a higher spring rate). A first vertical dashed line marks the first breaking point B1 between the first zone Z1 and the second zone Z2. A second vertical dashed line marks the second breaking point B2 between the second zone Z2 and the third zone Z3. When in the expanded state, as visualized in Fig. 4b, the spring system is in the third zone Z3. The global spring rate $k_{global}$ then equals the second spring rate k2 of the second spring. At ride height, as visualized in Fig. 2a, the spring system is in the second zone. Both the first spring and the second spring act in series, resulting in that the global spring rate $k_{global}$ equals the combined spring rate $k_{combined}$. At the compressed state, as visualized in Fig. 4a, the spring system is in the third zone Z1. The global spring rate $k_{global}$ then equals the second spring rate k2 of the second spring. By adjustment of the first platform, the position of the first and second breaking points B1, B2, may be moved. For example, if the first platform is adjusted such to reduce the first and second predetermined lengths, the first and second breaking points B1, B2, are moved to the right in the diagram in Fig. 5, as visualized by the dashed lines to the right of the solid line. This because, if the first predetermined length is reduced, the first spring may compress further before being limited by the first stopper from further compression. Thereby, relatively more force is required to compress the first spring so that it is stopped from further compression. Thus, the first breaking point B1 is moved further to the right. Further, if the second predetermined length is reduced the first spring is limited from expansion at a shorter spring length, thus increasing the preload of the first spring when the spring system is in the third zone. Thereby, relatively more force is required to overcome the preload of the first spring and lift it from the second stopper so to enable the spring system to go from the third zone into the second zone. Thus, the second breaking point B2 is also moved further to the right. This may be advantageous for compensating an increased load of the vehicle which results in that the ride height is lowered (moved to the right in the diagram). The first breaking point and the second breaking point may thereby be adjusted to compensate for the change in ride height. Alternatively, the first platform may be adjusted so to increase the first and second predetermined lengths. In that case, the first and second breaking points B1, B2, are moved to the left in the diagram in Fig. 5, as visualized by the dashed lines to the left of the solid line. This because, if the first predetermined length is increased, the first spring may can compress less before being limited by the first stopper from further compression. Thereby, relatively less force is required to compress the first spring so that it is stopped from further compression. Thus, the first breaking point B1 is moved further to the left. Further, if the second predetermined length is increased the first spring is limited from expansion at a longer spring length, thus reducing the preload of the first spring when the spring system is in the third zone. Thereby, relatively less force is required to overcome the spring preload of the first spring so to lift the first spring of the second stopper and enable the spring system to go from the third zone Z3 into the second zone Z2. Thus, the second breaking point B2 may be moved further to the left. This may be advantageous for compensating a reduction load of the vehicle which results in that the ride height is increased (moved to the left in the diagram). The first breaking point and the second breaking point may thereby be adjusted to compensate for the change in ride height. Further, the breaking points may be adjusted to account for other reasons beyond load change, such as variations in driving speed or conditions, and based on a driver's personal preferences. By adjusting the first stopper, it is possible to only adjust the first predetermined length. Thus, the first breaking point B1 may be moved to the right or the left independently of the second breaking point B2. By adjusting the first stopper and the first platform, the second predetermined length may be adjusted without adjusting the first predetermined length. Thus, the second breaking point B2 may be moved to the right or the left independently of the first breaking point B1. Now with reference to Fig. 6, in accordance with a third aspect of the disclosure, there is provided a method for a spring system of a shock absorber. The method comprises providing S1 a shock absorber 500 comprising a spring system as disclosed herein; loading S2 the shock absorber 500 such that the first spring and the second spring are compressed, adjusting S3 the first platform to adjust the first predetermined length L1 and the second predetermined length L2. By adjusting the first predetermine length L1, the first breaking point of where global spring rate varies can be regulated. By adjusting the second predetermined length, the second breaking point of where the global spring rate varies can be regulated.

In the drawings and specification, there have been disclosed preferred embodiments and examples of the disclosure and, although specific terms are employed, they are used in a generic and descriptive sense only and not for the purpose of limitation, the scope of the invention being set forth in the following claims. The present disclosure has mainly been described above with reference to a few embodiments. However, as is readily appreciated by a person skilled in the art, other embodiments than the ones disclosed above are equally possible within the scope of the present disclosure, as defined by the appended claims. Although features and elements are described above in particular combinations, each feature or element can be used alone without the other features and elements or in various combinations with or without other features and elements. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain features are recited in mutually different dependent claims does not indicate that a combination of these features cannot be used to advantage. Any reference signs in the claims should not be construed as limiting the scope.

**Claims**

1. A spring system (100, 200, 300) for a vehicle shock absorber, the spring system (100, 200, 300) comprising:

   a first platform (110, 210, 310);
   a second platform (120, 220, 320) which is movable relative to the first platform (110, 210, 310);
   a first spring (130, 230, 330) arranged in abutment with the first platform (110, 210, 310);
   a second spring (140, 240, 340), coupled in series with the first spring (130, 230, 330) and arranged in abutment with the second platform (120, 220, 320);
   a first stopper (150, 250, 350); and
   a second stopper (160, 260, 260), wherein the first stopper (150, 250, 350) is arranged to limit the compression of the first spring (130, 230, 330) when the first spring has a first predetermined length (L1), and the second stopper (160, 260, 360) is arranged to limit the expansion of the first spring (130, 230, 330) when the first spring (130, 230, 330) has a second predetermined length (L2), and
   wherein the first platform (110, 210, 310) is adjustable along an axis (A) extending between the first platform (110, 210, 310) and the second platform (120, 220, 320) such to adjust the first predetermined length (L1) and the second predetermined length (L2).

2. The spring system (100, 200, 300) according to claim 1, wherein the first stopper (150, 250, 350) is adjustable along the axis (A) such to adjust the first predetermined length (L1).

3. The spring system (100, 200, 300) according to any one of the preceding claims, wherein each of the first platform (110, 210, 310) and the first stopper (150, 250, 350) is adjustable relative to each other.

4. The spring system (100, 200, 300) according to any one of the preceding claims, wherein each of the first stopper (150, 250, 350) and the second stopper (160, 260, 360) is arranged between the first platform (110, 210, 310) and the second platform (120, 220, 320).

5. The spring arrangement (100, 200, 300) according to any one of the preceding claims, wherein each of the first spring (130, 230, 330) and the second spring (140, 240, 340) is a compression spring.

6. The spring system (200, 300) according to any one of the preceding claims, further comprising a tubular part (270, 370), wherein the second stopper (260, 360) is fixedly coupled with the tubular part (270, 370), and the first platform (210, 310) is movably coupled with the tubular part (270, 370).

7. The spring system (200, 300) according to claim 6, wherein the first stopper (250, 350) is movably coupled with the tubular part (270, 370).

8. The spring system (200, 300) according to any one of claims 6-7, wherein the tubular part (270, 370) extends around a radially inner circumference of the first spring (230, 330) and has a longitudinal extension in the direction of the axis (A).

9. The spring system (200) according to any one of claims 6-7, wherein the tubular part (270') extends around a radially outer circumference of the first spring (230) and has a longitudinal extension in the direction of the axis (A).

10. The spring system (200) according to any one of claims 6-9, wherein the tubular part (270) is arrangeable to be connected to a cylinder tube (510) of a shock absorber (500) onto which the spring system (200) is mountable, and to extend around a portion of a longitudinal extension of the cylinder tube (510), wherein the tubular part (270) is arrangeable to be adjustable along the axis (A) relative the cylinder tube (510).

11. The spring system (300) according to any one of claims 6-9, wherein the tubular part (370) is arrangeable to be fixedly coupled to a second mounting bracket (540), wherein said second mounting bracket (540) is fixedly coupled to a piston shaft (520) of a shock absorber (500) onto which the spring system (300) is mountable, and wherein the tubular part (370) extends around a longitudinal extension of the piston shaft (520).

12. The spring system ( 200, 300) according to any one of the preceding claims, further comprising

   a spring guide (280, 380) which is movably arranged relative to the first platform (210, 310) and arranged between the first spring (230, 330) and the second spring (240, 340), and
   the first platform (210, 310) and first stopper (250, 350) are arrangeable to stop the compression of the first spring (230, 330) by the first stopper engaging the spring guide (280, 380), and

the first platform (210, 310) and the second stopper (260, 360) are arrangeable to stop the expansion of the first spring (230, 330) by the second stopper (260, 360) engaging the spring guide (280, 380).

13. The spring system (200, 300) according to claim 12, wherein the spring guide (280, 380) is movably coupled with the tubular part (270, 370), such that it is movable in the direction of the axis (A) relative to the tubular part (270, 370).

14. A shock absorber (500) comprising a spring system (100, 200, 300) according to any one of the preceding claims.

15. Method for regulating a spring system of a shock absorber comprising:

 i. providing (S1) a shock absorber (500) comprising a spring system (100, 200, 300) according any one of claims 1-13;
 ii. loading (S2) the shock absorber (500) such that the first spring (130) and the second spring (140) are compressed,
 iii. adjusting (S3) the first platform (110) to adjust the first predetermined length (L1) and the second predetermined length (L2).

Fig. 1

Fig. 2a

Fig. 2b

Fig. 3

Fig. 4b

Fig. 4a

Fig. 5

Fig. 6

Europäisches
Patentamt
European
Patent Office
Office européen
des brevets

# EUROPEAN SEARCH REPORT

**Application Number**

EP 24 19 8855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 683 033 B2 (SHEPHERD JOHN D [US]) 16 June 2020 (2020-06-16) | 1,2,4,6, 7,9,14 | INV. F16F1/04 |
| A | * abstract; figures * | 3,5,8, 10-13 | F16F1/12 F16F3/04 |
| | ----- | | B60G15/06 |
| A | US 2023/302862 A1 (ADAMOVSKY MICHAEL FRANCIS ANTHONY [CA] ET AL) 28 September 2023 (2023-09-28) * abstract; figures * | 1,15 | B60G17/027 |
| | ----- | | |
| A | US 5 096 168 A (TAKEHARA SHIN [JP] ET AL) 17 March 1992 (1992-03-17) * the whole document * | 1 | |
| | ----- | | |

**TECHNICAL FIELDS SEARCHED (IPC)**

F16F
B60G

The present search report has been drawn up for all claims

| Place of search | Date of completion of the search | Examiner |
|---|---|---|
| The Hague | 20 February 2025 | Kramer, Pieter Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8855

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | | Publication date | Patent family member(s) | | Publication date |
|---|---|---|---|---|---|
| US 10683033 | B2 | 16-06-2020 | NONE | | |
| US 2023302862 | A1 | 28-09-2023 | BR | 112023002949 A2 | 21-03-2023 |
| | | | CA | 3190029 A1 | 24-02-2022 |
| | | | CN | 115916560 A | 04-04-2023 |
| | | | EP | 4200143 A1 | 28-06-2023 |
| | | | JP | 2023539164 A | 13-09-2023 |
| | | | KR | 20230054390 A | 24-04-2023 |
| | | | US | 2023302862 A1 | 28-09-2023 |
| | | | WO | 2022039752 A1 | 24-02-2022 |
| US 5096168 | A | 17-03-1992 | DE | 3935755 A1 | 10-05-1990 |
| | | | US | 5096168 A | 17-03-1992 |

For more details about this annex : see Official Journal of the European Patent Office, No. 12/82